# EUROPÄISCHE PATENTSCHRIFT

(11) **EP 1 500 451 B1**
(45) Veröffentlichungstag und Bekanntmachung des Hinweises auf die Patenterteilung: **11.05.2011**
(21) Anmeldenummer: 04014807.4
(22) Anmeldetag: 24.06.2004
(51) Int. Cl.: B23B 5/16, B23D 21/04

(54) **Verfahren und Vorrichtung zum Entgraten von Rohren**
Method and device to chamfer tubes
Méthode et dispositif pour chanfreiner des tubes

(30) Priorität: 25.07.2003 DE 10334373
(43) Veröffentlichungstag der Anmeldung: 26.01.2005
(73) Patentinhaber: Adolf Brodbeck Maschinenbau GmbH & Co. KG, 72555 Metzingen (DE)
(72) Erfinder: Maier, Siegfried, 72555 Metzingen (DE); Brodbeck, Adolf, 72555 Metzingen (DE)
(74) Vertreter: Maser, Jochen

(56) Entgegenhaltungen:
- EP-A- 0 515 832
- EP-A- 0 645 208
- FR-A- 2 155 761
- US-A- 2 537 916
- US-A- 3 183 702
- US-A- 3 724 303

## Beschreibung

Die Erfindung betrifft ein Verfahren gemäß dem Oberbegriff des Anspruchs 1 und eine Vorrichtung gemäß dem Oberbegriff des Anspruchs 11.

Aus der EP 0 338 015 ist ein Verfahren zum Schneiden und Entgraten von Rohren bekannt, bei dem ein Ausgangsrohr aufeinanderfolgend in eine Mehrzahl von kleinen Rohrstücken geschnitten und im Anschluss daran entgratet wird. Hierfür ist eine Maschine vorgesehen, welche eine Schneideinrichtung und Entgratungseinrichtung aufweist, die einer Schnittstelle zugeordnet sind. Ein Ausgangsrohr und ein abgeschnittenes Rohrstück werden jeweils von Tragbacken gehalten, welche am Außenumfang des Ausgangsrohres und des Rohrstücks angreifen. Nach dem Abschneiden eines Rohrstückes wird das Rohrstück von dem Ausgangsrohr in axialer Richtung der Längsachse des Ausgangsrohres entfernt, um dazwischen liegend eine Entgratungseinrichtung zu positionieren. Danach wird das abgeschnittene Rohrstück gegen die Entgratungseinrichtung gedrückt, welches wiederum an die Schnittkante des Ausgangsrohres gedrückt wird. Durch einen externen und außerhalb des Rohrstückes und Ausgangsrohres liegenden Antriebs wird die Entgratungseinrichtung betätigt.

Dieses Verfahren weist den Nachteil auf, dass in Abhängigkeit des Anpressdruckes die Entgratung der inneren und äußeren Schnittkante an der Schnittstelle abhängig ist. Des Weiteren weist die Vorrichtung den Nachteil auf, dass ein großer Bauraum im Bereich der Schnittstelle benötigt wird. Auch ist eine sehr aufwendige Konstruktion vorgesehen, um das Schneiden und Entgraten von Rohrstücken in einer Aufspannung zu ermöglichen.

Aus der DE-OS 20 15 795 geht ein Verfahren und eine Vorrichtung zum Schneiden von Rohren und zum Anfasen der Schnittkanten hervor. Bei diesem Verfahren wird ein Werkzeug eingesetzt, welches eine Kombination eines Abstechmeißels und dem Entgratungswerkzeug umfasst. Um die einzelnen Arbeitsschritte nacheinander durchführen zu können, ist erforderlich, dass das Ausgangsrohr und das abgeschnittene Rohrstück jeweils von einer Spannvorrichtung aufgenommen werden, die getrennt voneinander auf einem Maschinenbett vorgesehen und getrennt verfahrbar angeordnet sind. Diese Vorrichtung weist einen konstruktiv sehr aufwendigen Aufbau auf. Darüber hinaus ist bei diesem Verfahren nachteilig, dass für jede Anfasung beziehungsweise für jeden Durchmesser eines Rohres ein spezielles Werkzeug erforderlich ist, um ein Abschneiden von einem Rohrstück und ein Anfasen der Schnittkanten des Ausgangsrohres und Rohrstückes durchzuführen.

Aus der FR 2 155 761 A geht ein Verfahren zum Schneiden und Entgraten von Rohren hervor, bei dem ein Ausgangsrohr aufeinanderfolgend in eine Mehrzahl von kleinen Rohrstücken geschnitten und nachfolgend in derselben Aufspannung entgratet wird. Derartige Rohrstücke werden am Außenumfang durch Klemmbacken gehalten, die relativ zueinander verfahrbar sind. Eine solche Anordnung weist insbesondere bei Kunststoff-und Papprohren den Nachteil auf, dass bei einer zu festen Klemmung eine Beschädigung des Rohrumfanges erfolgt und bei einer zu losen Klemmung während der Bearbeitung eine gleichmäßige Rotation auf das Rohr nicht sichergestellt ist. Dadurch nimmt die Oberflächenqualität an den Schnittflächen der Rohrstücke ab. Darüber hinaus kann es zu Beschädigungen des Rohres bzgl. deren Durchmesser kommen.

Der Erfindung liegt deshalb die Aufgabe zugrunde, ein Verfahren zum Schneiden und Entgraten von Rohren, insbesondere Kunststoff- und Papprohren, vorzuschlagen, bei dem eine schnelle Arbeitsfolge zur Herstellung der Rohrstücke mit Schnittflächen von hoher Oberflächenqualität und angefasten Schnittkanten hergestellt wird und eine Vorrichtung zu schaffen, welche in der Handhabung einfach ausgebildet ist und die rationelle Fertigung von Rohrstücken auch mit einem kleinen Durchmesser ermöglicht.

Diese Aufgabe wird erfindungsgemäß durch ein Verfahren gemäß den Merkmalen des Anspruchs 1 und eine Vorrichtung gemäß den Merkmalen des Anspruchs 11 gelöst. In den weiteren abhängigen Ansprüchen sind vorteilhafte Weiterbildungen und Ausführungsformen der Erfindung angegeben.

Durch das erfindungsgemäße Verfahren mit einer innerhalb des Ausgangsrohres vorgesehenen Haltevorrichtung, durch welche das Ausgangsrohr durch Klemmung fixiert wird, ist unabhängig von einem Rohrdurchmesser und einer Wandstärke eines zu bearbeitenden Ausgangsrohres zur Herstellung von Rohrstücken eine rationelle Fertigung ermöglicht. Durch die aufeinander folgenden Verfahrenschritte wird die Herstellung von angefasten Schnittkanten und folglich einer hohen Oberflächenqualität am Außen- und Innenumfang des Rohrstückes sowie zumindest eine Feinbearbeitung der in der Schnittstelle liegenden Schnittkante in einer Aufspannung ermöglicht. Insbesondere bei Papp- oder Kunststoffrohren ist eine besondere hohe Oberflächengüte der Stirnflächen an den Rohrstücken sowie einer am Außen- und Innenumfang vorgesehenen Fase gewünscht, um das Anbringen oder Aufsetzen der Rohre, beispielsweise auf Wickeldornen, zu erleichtern und das optische Erscheinungsbild zu verbessern.

Nach einer vorteilhaften Ausführungsform des Verfahrens ist vorgesehen, dass das Entgratungswerkzeug zur Bearbeitung einer äußeren Schnittkante dem Schneidwerkzeug vorauseilend, nacheilend oder gleichzeitig der Schnittstelle zugeführt wird. Dadurch werden prozessoptimiert zwei Bearbeitungsgänge kurz aufeinander folgend, gleichzeitig oder teilweise ineinander greifend vorgenommen. Bevorzugt wird das Entgratungswerkzeug einem Schneidwerkzeug, wie beispielsweise einem Abstechmeißel, nacheilend betrieben, so dass die Fase an der äußeren Schnittkante gleichzeitig mit dem Schnittvorgang beendet sein kann.

Nach einer weiteren vorteilhaften Ausführungsform des Verfahrens ist vorgesehen, dass nach dem Entgraten der Innenkante des Ausgangsrohres und des Rohrstückes beim Herausführen des Entgratungswerkzeugs aus dem Innenraum des Ausgangsrohres und des Rohrstücks die Stirnflächen des Ausgangsrohres und des Rohrstückes bearbeitet werden. Bevorzugt wird ein Schlichtvorgang durchgeführt, um eine hohe Oberflächenqualität zu erzielen.

Die Bearbeitung der Stirnflächen des Ausgangsrohres und des Rohrstückes werden nacheinander oder gleichzeitig nach einer bevorzugten Ausführungsform durchgeführt. Die gleichzeitige Bearbeitung weist den Vorteil auf, dass eine zeitoptimierte Fertigung ermöglicht ist. In Abhängigkeit des Materials und der Wandstärke des Ausgangsrohres kann die nacheinander erfolgende Bearbeitung von Vorteil sein, um das Werkzeug auf einer niederen Arbeitstemperatur zu halten, so dass eine hohe Oberflächengüte erzielt wird.

Nach einer weiteren vorteilhaften Ausgestaltung des Verfahrens ist vorgesehen, dass beim Abschneiden eines Rohrstückes das Ausgangsrohr in Rotation versetzt wird. Dadurch können die Schneid- und Entgratungswerkzeuge als nicht rotierende Teile ausgebildet werden, wodurch ein einfacher Aufbau der Vorrichtung gegeben ist.

Nach einer weiteren vorteilhaften Ausgestaltung des Verfahrens ist vorgesehen, dass während dem Entgraten der Schnittstelle und vorzugsweise während der Feinbearbeitung der Stirnflächen das Ausgangsrohr und das Rohrstück in Rotation versetzt wird. Gleichzeitig kann nach dem Einbringen des Schnittes sowohl das Ausgangsrohr als auch das Rohrstück mit der gleichen Umfangsgeschwindigkeit angetrieben werden, wodurch eine gleichmäßige und einheitliche Herstellung der Fase und Oberflächengüte der Stirnfläche an der Schnittstelle hergestellt wird. Durch die nicht rotierenden Werkzeuge wird des Weiteren der Vorteil erzielt, dass die Spanabfuhr erleichtert und kontrollierbar ist.

Das Verfahren sieht des Weiteren vorteilhafterweise vor, dass zumindest während dem Abschneiden des Rohrstücks zumindest eine Kühlung und/oder Schmierung an der Schnittstelle vorgesehen ist oder ein Kühloder Schmiermittel zugeführt wird. Dadurch können die Schnittstellen des Ausgangsrohres und des Rohrstückes mit hoher Qualität ausgeführt werden. Gleichzeitig werden Veränderungen in den Materialeigenschaften im Bereich der Schnittstelle aufgrund von Erwärmungen während dem Schneidprozess vermieden.

Die Haltevorrichtung zur Aufnahme des Rohrstücks wird vorteilhafterweise von einer Antriebseinheit in Rotation versetzt, welche das Ausgangsrohr antreibt. Dadurch wird eine Vereinfachung des Aufbaus der Vorrichtung erzielt und bei der Bearbeitung der inneren Schnittkanten und der Stirnflächen eine einheitliche Güte erzielt.

Nach einer weiteren vorteilhaften Ausgestaltung des Verfahrens ist vorgesehen, dass die Haltevorrichtung über eine am Außenumfang des Rohrstücks angreifende Lagerung koaxial zur Aufspannrichtung positioniert wird. Somit kann eine innerhalb des Ausgangsrohres und des Rohrstückes liegende Haltevorrichtung vorgesehen sein, welche durch die präzise Positionierung des abgeschnittenen Rohrstücks zum Ausgangsrohr eine gleichzeitige Bearbeitung der am Innenumfang hergestellten Schnittkante und die einander gegenüberliegenden Stirnflächen ermöglicht. Die Qualitäten der Schnittstellen am Rohrstück und am Ausgangsrohr sind gleich, so dass bei der Weiterverarbeitung des Rohrstücks auf ein bevorzugtes Ende nicht zu achten ist.

Des Weiteren ist vorteilhafterweise vorgesehen, dass zumindest während der Zustellbewegung des Schneidwerkzeuges über die in dem Ausgangsrohr positionierte Haltevorrichtung ein Luftstrom zugeführt wird. Dadurch erfolgt eine Kühlung von innen. Gleichzeitig kann unmittelbar beim Durchtrennen der Wandstärke der erzeugte Span nach außen abgeführt werden, wodurch die Trennstelle frei von Spänen ist, so dass auch Beschädigungen an den Schnittstellen des Ausgangsrohres und des Rohrstückes ausbleiben.

Die erfindungsgemäße Vorrichtung weist den Vorteil auf, dass eine kompakte und platzsparende Anordnung geschaffen ist, bei der die Haltevorrichtung in dem Ausgangsrohr vorgesehen ist und eine Bearbeitung der Endabschnitte, des Ausgangsrohres und der Rohrstücke in einer hohen Qualität ermöglicht. Durch die Abstützung der Schnittstelle mit einem am Ausgangsrohr angreifenden Stützabschnitt und einer am Rohrstück angreifenden Spanneinrichtung wird ermöglicht, dass mit einem hohen Vorschub des Schneidwerkzeuges ein Abstechvorgang durchgeführt wird. Gleichzeitig sind die Druckbelastungen während des Schneidvorganges durch die unmittelbar benachbart zur Schnittstelle angeordnete Abstützung sicher aufgenommen, wodurch die Prozesssicherheit während dem Zustellen des Schneidwerkzeuges erhöht ist und die Prozessdauer gesenkt wird.

Nach einer weiteren vorteilhaften Ausgestaltung der Vorrichtung ist vorgesehen, dass die Aufspannvorrichtung in axialer Richtung relativ zur Haltevorrichtung verschiebbar ist. Dadurch ist ermöglicht, dass die Schneid- und Entgratungswerkzeuge in einer feststehenden Position angeordnet sind und das Ausgangsrohr zur Herstellung eines neuen Rohrstückes durch das Nachführen des Ausgangsrohres über die Aufspannvorrichtung vorgesehen ist. Somit können die Werkzeuge an einem steifen und schwingungsfreien Maschinengestell vorgesehen sein, wodurch wiederum die Bearbeitungsqualität erhöht ist. Gleichzeitig ist der Aufwand von Bauteilkomponenten verringert.

Alternativ kann vorgesehen sein, dass die Werkzeuge zumindest geringfügig relativ zur Schnittstelle verfahrbar vorgesehen sind. Dadurch kann beispielsweise beim Einführen des Entgratungswerkzeuges in den Innenraum des Ausgangsrohres eine Positionierbewegung des Ausgangsrohres oder des Rohrstückes entfallen.

Vorteilhafterweise können das Ausgangsrohr, das Rohrstück und zumindest das Entgratungswerkzeug relativ zur Schnittstelle bewegbar ausgeführt sein. Diese Ausführungsform weist ein Maximum an Flexibilität auf, um nach dem Herstellen des Rohrstückes eine Entgratung an den einander gegenüberliegenden Stirnflächen beziehungsweise Schnittflächen durchzuführen.

Nach einer weiteren vorteilhaften Ausgestaltung der Vorrichtung ist vorgesehen, dass ein Stützabschnitt in einer Arbeitsposition auf einem Führungsrohr der Haltevorrichtung angeordnet ist und vorzugsweise in Anpassung an unterschiedliche Durchmesser austauschbar ist. Der Stützabschnitt kann als Aufsteckring oder geschlitzter Ring ausgebildet sein. Durch die austauschbare Anordnung des Stützabschnittes kann eine schnelle Umrüstung auf unterschiedlich zu bearbeitende Innendurchmesser der Rohre gegeben sein. Der Stützabschnitt ist vorteilhafterweise auch an der Aufspannvorrichtung vorgesehen.

Nach einer weiteren vorteilhaften Ausgestaltung der Erfindung ist vorgesehen, dass die Spanneinrichtung des Rohrstückes auf einem Führungsrohr der Haltevorrichtung positioniert ist, welches Wirkelemente zur Betätigung der Spanneinrichtung zur Vergrößerung des Außenumfangs umfasst. Dadurch ist eine innenliegende, also innerhalb des Rohrstücks angeordnete, Anordnung geschaffen, welche eine kompakte Bauweise sowie einen unmittelbaren Angriff nahe der Schnittstelle ermöglicht.

Nach einer weiteren vorteilhaften Ausgestaltung der Vorrichtung ist vorgesehen, dass eine Zugstange an dem Führungsrohr angreift, welches in einer Schließstellung auf ein Keilgetriebe der Halteeinheit wirkt und Spannbacken in einer Klemmposition zum Rohrstück fixiert. Dadurch kann in einfacher Weise eine Aufnahme des Rohrstückes ermöglicht sein, welches ebenso wie das Ausgangsrohr nach dem Einbringen eines Schnittes rotierbar angeordnet ist.

Nach einer alternativen Ausgestaltung der Vorrichtung ist vorgesehen, dass das Führungsrohr eine Kurvenscheibe mit Nocken betätigt, wodurch die Spannbacken in eine Klemmposition übergeführt werden. Die Kurvenscheibe weist vorteilhafterweise Nocken auf, welche an Segmenten in einen Hülsenabschnittes angreifen und diese radial nach außen bewegen.

Nach einer weiteren alternativen Ausgestaltung der Spanneinrichtung ist vorgesehen, dass in dem Führungsrohr ein Druckkolben geführt oder eine Druckleitung vorgesehen ist, welche ein Druckmedium in Kammern in der Spanneinrichtung unter Druck einbringt. Diese alternative Antriebsform zur Positionierung der Spanneinrichtung in einer Klemmposition ist ebenfalls geeignet, um das Rohrstück rotierbar anzutreiben.

Das Druckmedium ist vorteilhafterweise als hydraulisches oder pneumatisches Medium vorgesehen. Beispielsweise kann eine Membran vorgesehen sein, in welche ein Druckmedium gefüllt wird. Diese Membran weitet sich auf, so dass einzelne Segmente der Spanneinrichtung in die Klemmposition übergeführt werden.

Nach einer weiteren alternativen Ausführungsform der Spanneinrichtung ist vorgesehen, dass in dem Führungsrohr eine Zugstange vorgesehen ist, welche einen Hebelmechanismus zur Überführung von Spannbacken oder Spannelementen in eine Klemmposition betätigt. Diese Ausführungsform stellt eine weitere mechanische Lösung dar, welche ebenfalls zum rotatorischen Antrieb der Halteeinheit einsetzbar ist.

Bevorzugt ist vorgesehen, dass an einem Stützabschnitt der Spanneinrichtung ein Ausgleichselement auswechselbar aufgenommen ist. Dadurch kann eine exakte Anpassung an einen Innendurchmesser des zu bearbeitenden Rohrstücks erfolgen. Ein Gehäuse der Spanneinrichtung weist einen vorbestimmten Außendurchmesser auf. Der Stellweg oder Hub der Klemmsegmente beträgt beispielsweise 2 mm im Durchmesser gegenüber dem Gehäusedurchmesser. Die Toleranzen eines Innendurchmessers des zu bearbeitenden Rohrstücks können durch die Klemmsegmente überbrückt werden, um eine Spannung zu ermöglichen. Damit nahe der Bearbeitungsstelle beziehungsweise Schnittstelle eine optimale Auflage des Rohrstücks gegeben ist, wird entsprechend dem Innendurchmesser des Rohrstücks ein Ausgleichselement auf einen Stützabschnitt aufgebracht, der der Bearbeitungsstelle zugeordnet ist. Dadurch sind die Auflageverhältnisse links und rechts der Schnittstelle nahezu gleich oder gleich, wodurch ein sauberer Schnitt und eine gleichmäßige Innen- und Außenentgratung des Rohrstücks ermöglicht ist.

Das Ausgleichselement ist vorteilhafterweise als Ausgleichsring aufgesetzt, um eine zentrierte Aufnahme zum Stützabschnitt zu bilden. Eine an dem Ausgleichsring vorgesehene Zentrierung, die in Form eines Ringbundes ausgebildet ist, ermöglicht eine verbesserte Aufnahme des Rohrstück. Dadurch wird die Rundheit verbessert und eine erhöhte Bearbeitungsqualität erzielt.

Nach einer weiteren vorteilhaften Ausgestaltung der Vorrichtung ist vorgesehen, dass ein Stützring auf einem Ausstoßer auswechselbar vorgesehen ist oder dass auf dem Stützring ein Ausgleichselement auswechselbar vorgesehen ist. Somit kann der auf dem Ausstoßer angeordnete Stützring ebenfalls an einem exakten Innendurchmesser des zu bearbeitenden Rohrstücks angepasst werden, so dass eine gleichmäßige Aufnahme des Endabschnitts des Rohrstückes auf dem Stützring des Ausstoßers gegeben ist. Der austauschbare Stützring oder ein darauf angeordnetes austauschbares Ausgleichselement weisen analog dem Ausgleichselement auf dem Stützabschnitt ebenfalls in wenigen zehntel Millimetern gestufte Außendurchmesser auf, um eine optimale Anpassung zu ermöglichen.

Die Erfindung sowie weitere vorteilhafte Ausführungsformen und Weiterbildungen derselben werden im Folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figuren 1 bis 6: schematische Darstellungen einzelner Verfahrensschritte zum Schneiden und Entgraten eines Rohrstückes,
- Figuren 7a bis c: schematische Darstellungen einzelner alternativer Verfahrensschritte für einen ersten Bearbeitungszyklus,
- Figur 8: eine schematische Schnittdarstellung einer erfindungsgemäßen Haltevorrichtung,
- Figur 9: eine schematische Seitenansicht der Haltevorrichtung gemäß Figur 8 und
- Figuren 10 bis 13: schematische Schnittdarstellungen alternativer Ausführungsformen zu Figur 8.

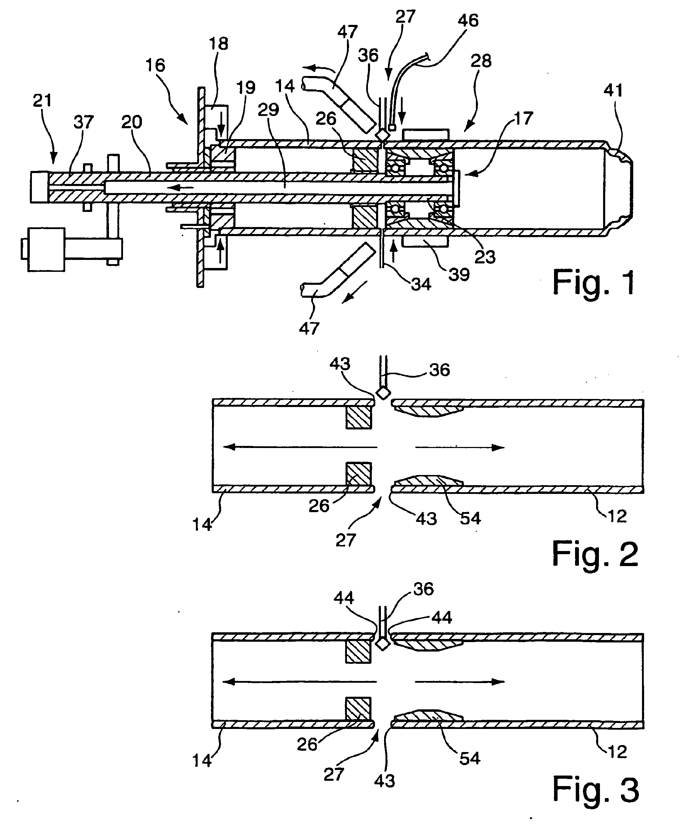

In Figur 1 ist ein Ausschnitt einer Vorrichtung 11 zum Schneiden und Entgraten von Rohren 12 dargestellt. Die Vorrichtung 12 kann mit einer vorzugsweise automatischen Zuführstation ausgerüstet sein, durch welche Ausgangsrohre 14 großer Länge von beispielsweise 2 bis 7 m bereitgestellt werden. Das Ausgangsrohr 14 wird zur Herstellung von Rohrstücken 12 von einer Aufspannvorrichtung 16 und einer Haltevorrichtung 17 aufgenommen. Die Aufspannvorrichtung 16 umfasst beispielsweise ein Dreibackenfutter 18, durch welche das Ausgangsrohr 14 zu einem Stützring 19 fixiert ist. Das Dreibackenfutter 18 und der Stützring 19 sind durch eine Antriebseinheit 21 rotierbar angetrieben. Der Stützring 19 ist auf den zu bearbeitenden. Durchmesser des Ausgangsrohres 14 anpassbar bzw. es können Stützringe 19 mit unterschiedlichem Durchmesser eingesetzt werden.

Der Stützring 19 ist auf einem Halterohr 20 positioniert, welcher die Haltevorrichtung 17 aufnimmt. Diese Haltevorrichtung 17 umfasst einen Stützabschnitt 26, der auf dem Halterohr 20 angeordnet und einer Schnittstelle 27 zugeordnet ist. Benachbart zur Schnittstelle 27 und dem Stützabschnitt 26 gegenüberliegend ist eine Spanneinrichtung 28 vorgesehen, welche durch eine Zugstange 29 betätigt wird und von einem Führungsrohr 23 aufgenommen ist. Die Zugstange 29 ist in dem Führungsrohr 23 axial verschiebbar geführt. Die Spanneinrichtung 28 weist dem Ausführungsbeispiel in Figur 1 ein Keilgetriebe 31 auf, welches beim Betätigen der Zugstange 29 bewirkt, so dass Spannbacken oder Segmente 32 radial nach außen bewegt werden, wodurch die Spanneinrichtung in eine Klemmposition zum Ausgangsrohr 14 übergeführt wird.

Zwischen dem Stützabschnitt 26 und der Spanneinrichtung 28 ist die Schnittstelle 27 für ein Schneidwerkzeug 34 und ein Entgratungswerkzeug 36 vorgesehen. Der zwischen dem Stützabschnitt 26 und der Spanneinrichtung 28 verbleibende Abstand ist derart minimiert, dass das Schneidwerkzeug 34 und das Entgratungswerkzeug 36 ungehindert die einzelnen Bearbeitungsschritte durchführen können und eine hinreichende Abstützung des Ausgangsrohres 14 und des Rohrstückes 12 gegeben ist.

Die Zugstange 29 ist bspw. durch einen pneumatischen oder hydraulischen Zylinder 37 der Antriebseinheit 21 betätigbar. Alternativ kann ein elektrischer, elektromagnetischer oder mechanischer Antrieb vorgesehen sein, welcher vorzugsweise eine Spindel antreibt, um die Zustellbewegung der Zugstange 29 durchzuführen. Der die Zugstange 29 umgebende Halterohr 20 ist durch die Antriebeinheit 21 ebenfalls rotierbar angetrieben. Die Antriebsverbindung zwischen der Antriebseinheit 21 und dem Dreibackenfutter 18 ist in ihrer Art üblich.

Zur lagerichtigen Positionierung der Haltevorrichtung 17 zur Schnittstelle 27 ist eine Lagerung 39 vorgesehen, welche am Außenumfang des Ausgangsrohres 14 und/oder des Rohrstücks 12 angreift und die Haltevorrichtung 17 koaxial zur Aufspannvorrichtung 16 positioniert. Diese Lagerung 39 kann durch Laufrollen, durch eine Rinne, vorzugsweise V-förmige Rinne mit einer Gleitbeschichtung, oder durch Bürsten in Form von einer Rinne oder dergleichen vorgesehen sein. Dieses Lager 39 ermöglicht, dass Ausgangsrohre 14 mit einer Länge von mehreren Metern bearbeitet werden können.

In den Figuren 1 bis 6 ist ein Bearbeitungszyklus zu Herstellung von Rohrstücken 12 aus einem Ausgangsrohr 14 dargestellt und nachfolgend näher beschrieben:

Das Ausgangsrohr 14 ist bspw. aus Kunststoff hergestellt. Alternativ können auch Papprohre, metallische Rohre oder sonstige Rohre bearbeitet werden. Das im Ausführungsbeispiel aus Kunststoff bestehende Ausgangsrohr weist einen Anguß 41 auf. Der erste Bearbeitungszyklus dient dazu, um den Anguß 41 zu entfernen und an dem nachfolgend ersten Rohrstück 12 eine Innen- und Außenfase 41, 43 an einer Schnittkante 44 herzustellen.

Das Ausgangsrohr 14 wird über die Antriebseinheit 21 in Rotation versetzt. Im Anschluss daran wird ein Schneidwerkzeug 34, welches vorzugsweise ein Abstechmeißel ist, mit einer frei wählbaren und vorbestimmten Zustellbewegung auf das Ausgangsrohr 14 zugeführt. Durch spanende Bearbeitung wird das Ausgangsrohr 14 bearbeitet. Während der spanabhebenden Bearbeitung wird ein Kühl- oder Schmiermedium über eine Zuführleitung 46 zugeführt, um das Schneidwerkzeug 34 und die Schnittstelle 27 zu kühlen. Ebenso kann eine Schmierung, vorzugsweise eine Minimalmengenschmierung, vorgesehen sein, die beispielsweise von außen auf das Schneidwerkzeug 34 zugeführt wird.

Das Entgratungswerkzeug 36 ist bevorzugt dem Schneidwerkzeug 34 gegenüberliegend vorgesehen. Nach dem Einstechen des Schneidwerkzeuges 34 erfolgt eine Zuführung des Entgratungswerkzeugs 36. Dem Entgratungswerkzeug 36 ist ebenfalls eine Zuführleitung 46 zugeordnet, welche ein Kühl- und/oder Schmiermedium zuführt. Zur Abführung der Späne ist vorteilhafterweise eine Absaugung 47 vorgesehen. Die Entgratung einer am Außenumfang eingebrachten Schnittkante 44 ist bevorzugt gleichzeitig mit der Herstellung des Schnittes fertiggestellt. Das Schneidwerkzeug 34 wird in seine Ausgangsposition zurückgeführt. Im Anschluss daran werden das Ausgangsrohr 14 und das Rohrstück 12 mit Anguß 41 relativ zueinander auseinander bewegt, wie Figur 2 zeigt. Die Auseinanderbewegung ist auf die Größe des Entgratungswerkzeuges 36 abgestimmt. Gemäß dem Ausführungsbeispiel erfolgt betragsmäßig eine gleiche Bewegung von Ausgangsrohr 14 und Rohrstück 12. Nachdem ein hinreichend großer Spalt zum Einführen des Entgratungswerkzeugs 36 vorliegt, taucht das Entgratungswerkzeug 36 gemäß Figur 3 in den Innenraum des Ausgangsrohres 14 und des Rohrstücks 12 ein.

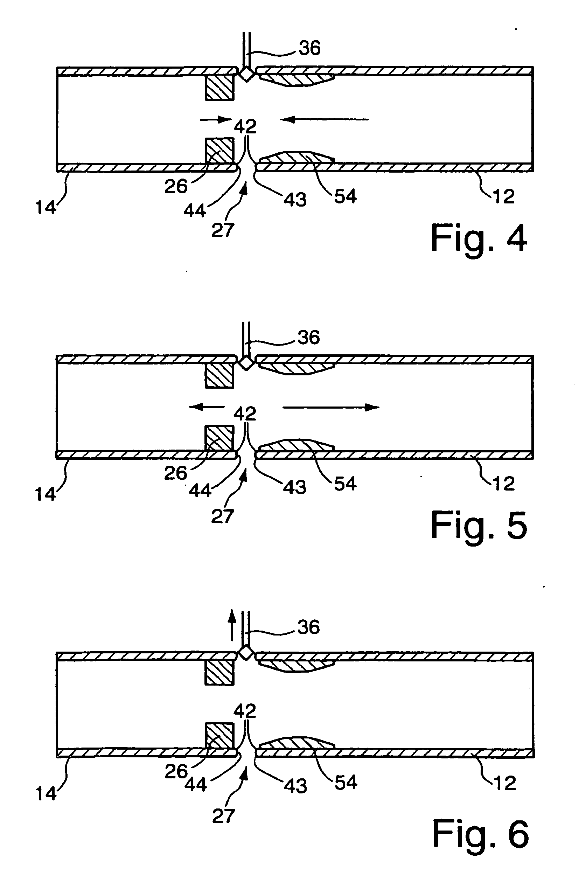

Im Anschluss daran werden, wie in Figur 4 dargestellt ist, das Ausgangsrohr 14 und das Rohrstück 12 in eine Entgratungsposition übergeführt, so dass eine Innenfase 42 gleichzeitig an dem Ausgangsrohr 14 und Rohrstück 12 hergestellt wird.

Alternativ kann vorgesehen sein, dass zunächst das Ausgangsrohr 14 in die Entgratungsposition übergeführt wird, um eine Innenfase herzustellen. Analoges gilt für das Rohrstück 12, wobei nach Herstellen der Innenfase 42 an dem Ausgangsrohr 12 dieses aus der Entgratungsposition herausgeführt wird, um im Anschluss daran die Bearbeitung des Rohrstückes 12 vorzunehmen.

Nach dem Herstellen der Innenfase 42 wird gemäß Figur 5 das Ausgangsrohr 14 und das Rohrstück 12 aus der Entgratungsposition herausgeführt und in eine weitere Bearbeitungsposition übergeführt, in der Stirnflächen 49 des Ausgangsrohrs 14 und des Rohrstückes 12 bearbeitet werden.

Während der Auswärtsbewegung des Entgratungswerkzeuges 36 aus dem Innenraum des Ausgangsrohres 14 und des Rohrstückes 12 werden die Stirnflächen 49 bearbeitet. Dies ist beispielsweise in Figur 6 dargestellt. Das Ausgangsrohr 14 und das Rohrstück 12 sind in einer Position dargestellt, in welcher die Stirnflächen 49 gleichzeitig bearbeitet werden. Alternativ kann wiederum vorgesehen sein, dass zunächst eine der beiden Stirnflächen 49 des Ausgangsrohres 14 und des Rohrstückes 12 bearbeitet werden.

Bevorzugt wird ein Schlichten durchgeführt, um eine hohe Oberflächengüte und -qualität zu erzielen. Nachdem die Stirnfläche 49 fertiggestellt ist, wird das Entgratungswerkzeug 36 in eine Ausgangsposition zurückgeführt. Die Spanneinrichtung 28 wird aus einer Klemmposition in ein Ruheposition übergeführt, wodurch das Rohrstück 12 frei wird. Durch Positionieren oder Nachschieben des Ausgangsrohres 14 in eine neue Position zur Herstellung des Rohrstücks 12 wird das geschnittene Rohrstück 12 mit Anguss 41 von der Spannvorrichtung 17 abgestreift oder abgeworfen. Im ersten Bearbeitungszyklus wird das Rohrstück 12 mit Anguss 41 als Abfall aussortiert.

Der erste Bearbeitungszyklus wird ebenfalls vollständig durchgeführt, da die Stirnfäche 49 am Ausgangsrohr 14 im nächsten Bearbeitungszyklus eine Stirnfläche des Rohrstückes 12 darstellt und somit bereits bei diesem ersten Arbeitszyklus eine erste Stirnfläche 49 eines Rohrstückes 12 mit einer Innen- und Außenfase 42, 43 hergestellt ist.

Zur Durchführung des nächstfolgenden Bearbeitungszyklus wird die Aufspannvorrichtung 16 axial auf die Spanneinrichtung 28 zubewegt. Durch die Länge des Verstellweges wird die Länge des Rohrstückes 12 eingestellt und bestimmt. Im Anschluss daran wird die Spanneinrichtung 28 betätigt und in eine Klemmposition übergeführt und der zuvor beschriebene Arbeitszyklus beginnt erneut.

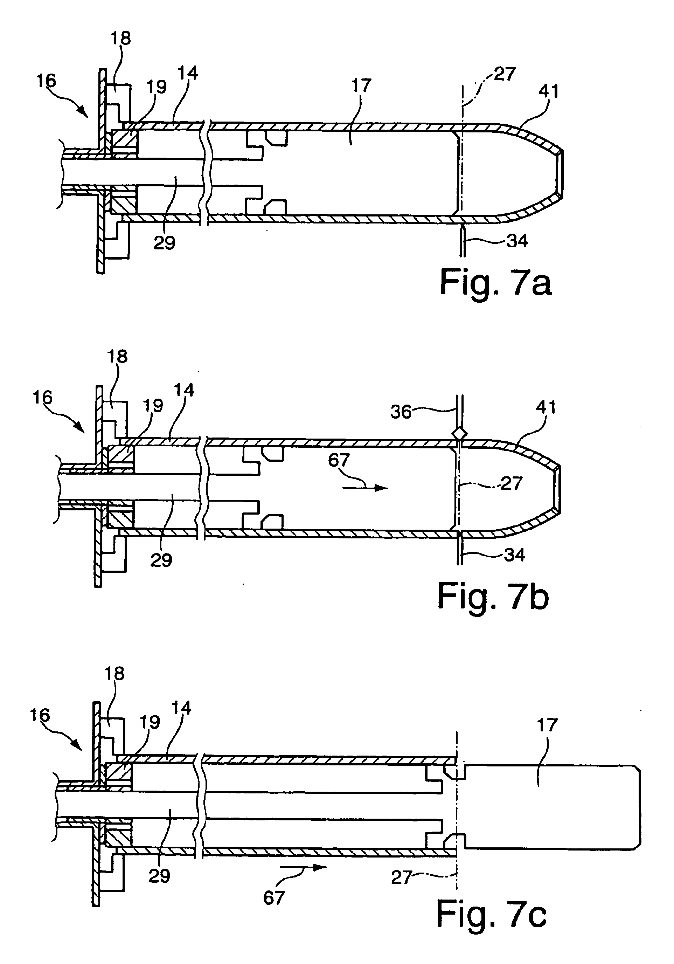

In den Figuren 7a bis c ist ein alternativer Verfahrensablauf für einen ersten Bearbeitungszyklus dargestellt. Dieser erste Bearbeitungszyklus sowie auch der zu den Figuren 1 bis 6 beschriebene erste Bearbeitungszyklus ist immer dann erforderlich, sofern ein Anguss 41 an einem Ausgangsrohr 14 vorgesehen ist.

Das Ausgangsrohr 14 wird auf die Aufspannvorrichtung 16 und Haltevorrichtung 17 aufgesetzt. Das Dreibackenfutter 18 legt ein Ende des Ausgangsrohres 14 zum Stützring 19 fest. Die Haltevorrichtung 17 wird über eine Zugstange 29 in eine erste Position übergeführt, bei der die Haltevorrichtung 17 im Ausführungsbeispiel links zur Schnittstelle 27 positioniert ist. Das Ausgangsrohr 14 wird in Rotation versetzt und ein Schneidwerkzeug 34 bearbeitet das Ausgangsrohr 14, so dass ein Anguss 41 von dem Ausgangsrohr 14 abgetrennt wird. Dies ist in Figur 7b dargestellt. Im Anschluss daran wird gemäß Pfeil 67 die Haltevorrichtung 17 nach rechts bewegt, so dass diese in einer Arbeitsposition gemäß Figur 7c übergeführt wird. In dieser Position ist das erste freie Ende des Ausgangsrohres 14 zu einer Vertiefung 88 der Haltevorrichtung 17 angeordnet. In dieser Position wird dieses erste freie Ende durch das Entgratungswerkzeug 36 bearbeitet, so dass an diesem Ende eine Innenfase 42, eine Außenfase 43 sowie eine Stirnfläche 49 mit hoher Oberflächengüte vorliegt. Im Anschluss daran wird die Aufspannvorrichtung 16 auf die Schnittstelle 27 zubewegt, so dass das Ausgangsrohr 14 zumindest teilweise oder vollständig die Haltevorrichtung 17 überdeckt. In Abhängigkeit der zu erstellenden Breite des Rohrstückes 12 erfolgt die Schiebebewegung der Aufspannvorrichtung 16 in Richtung auf die Schnittstelle 27. Anschließend wird die Haltevorrichtung 17 betätigt, so dass die Spanneinrichtung 28 von innen an das Ausgangsrohr 14 angreift, um den nächstfolgenden Bearbeitungszyklus zur Herstellung eines ersten Rohrstückes 12 durchzuführen.

Bei Rohren, die ohne Anguss 41 zur Bearbeitung anstehen, kann ebenso ein erster Arbeitszyklus gemäß den Figur 1 bis 6 oder den Figuren 7a bis c durchgeführt werden sowie ein erster Bearbeitungszyklus, der bspw. in einer Position gemäß Figur 7c beginnt. Es kann unmittelbar die Endbearbeitung des ersten freien Endes des Ausgangsrohres 14 vorgesehen sein oder zunächst eine geringfügige Bearbeitung des Ausgangsrohres 14 mit dem Schneidwerkzeug durchgeführt werden, um nachfolgend mit dem Entgratungswerkzeug den gewünschten Endzustand fertigzustellen.

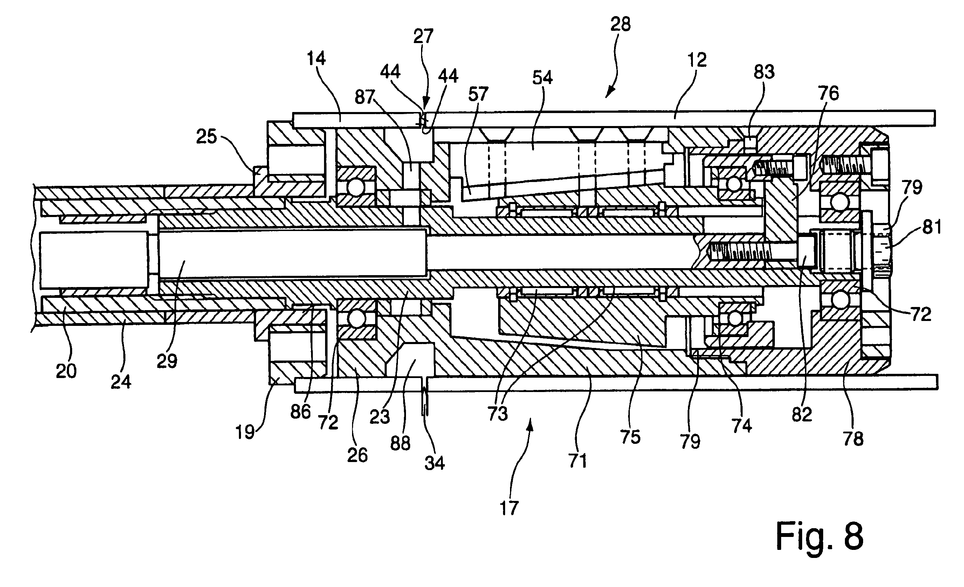

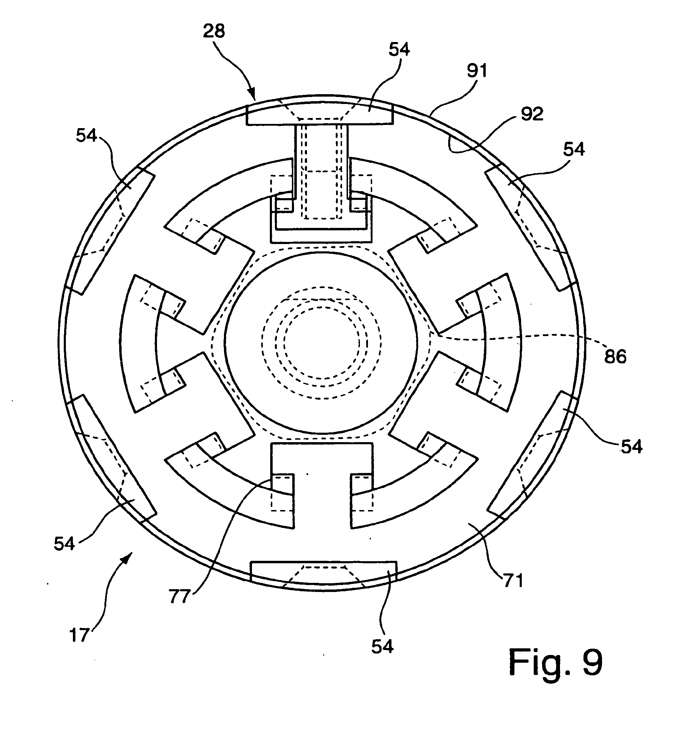

In Figur 8a ist ein schematischer Vollquerschnitt einer erfindungsgemäßen Haltevorrichtung 17 dargestellt. Figur 9 zeigt eine Seitenansicht auf die Haltevorrichtung 17 gemäß Figur 8 von rechts. Die Haltevorrichtung 17 ist über ein Führungsrohr 23 an einem Halterohr 20, vorzugsweise durch ein Schraubgewinde, lösbar befestigt. Dadurch kann eine schnelle und einfache Auswechslung der Haltevorrichtung 17 auf unterschiedliche Durchmesser der zu schneidenden Ausgangsrohre 14 gegeben sein. Das Halterohr 20 wird von einem Ausstoßer 24 umgeben. Dieser Ausstoßer 24 ist axial verschiebbar gegenüber dem Halterohr 20 positioniert. Der Ausstoßer 24 greift an einem der Haltevorrichtung 17 zugeordneten Ende an einer Lagerschale 25 an, welche vorzugsweise als Sinterbüchse ausgebildet ist. Diese Lagerschale nimmt den Stützring 19 auf. Um das Reststück des Ausgangsrohres auszuwerfen ist vorgesehen, dass der Auswerfer 24 in eine Position nahe der Schnittstelle 27 übergeführt wird, so dass ein einfaches und schnelles Abstreifen eines Restausgangsrohres 14 ermöglicht ist. In Figur 8 umfasst das Ausgangsrohr 14 ein kurzes Reststück, welches sich auf dem Stützring 19 fixiert ist und auf dem Stützabschnitt 26 abstützt. Der Stützabschnitt 26 ist Teil eines Gehäuses 71, welches die Spanneinrichtung 28 aufnimmt. Das Gehäuse 71 ist über Lager 72 drehbar zum Führungsrohr aufgenommen. Auf dem Führungsrohr 23 sind keilförmige Hülsenabschnitte oder eine Hülse 75 positioniert, welche beispielsweise über Nadellager 73 drehbar und axial verschiebbar auf dem Führungsrohr 23 angeordnet sind. Die Spannbacken 54 stehen über eine Wellenverbindung 74 mit einem sternförmigen Halteabschnitt 76 mit der Zugstange 29 in Verbindung, wodurch die keilförmige Hülse 75 axial zum Führungsrohr 23 verschiebbar ist. Durch Betätigung der Zugstange 29 wird die keilförmige Hülse 75 nach links bewegt, wodurch die Spannbacken 54 radial nach außen bewegt werden. Alternativ kann vorgesehen sein, dass die Spannbacken eine Schwenkbewegung durchführen. Gemäß dem Ausführungsbeispiel ist vorgesehen, dass die Spannbacken 54 in T-förmigen Nuten 77 geführt sind, welche schräg verlaufend angeordnet sind. Dadurch kann eine gleichmäßige Kraftübertragung von der keilförmigen Hülse 75 über die Spannbacken 54 auf das Rohrstück 12 gegeben sein. Andere Ausführungsformen von Keilgetrieben sind ebenfalls einsetzbar, die eine Spannbewegung der Spannbacken 54 ermöglichen.

Das Gehäuse 71 ist zweiteilig ausgebildet und weist einen Endabschnitt 78 auf, welcher an dem Führungsrohr 23 über das Wellenlager 72 durch eine Schraubverbindung 79 befestigt ist. Die Schraubverbindung 79 ist beispielsweise als Sechskantmutter mit einer Innenbohrung 81 ausgebildet, um auf ein Befestigungsmittel 82 zuzugreifen, welches das sternförmige Halteelement 76 zur Zugstange 29 fixiert und die Spannbewegung der keilförmigen Hülse 75 bewirkt. Der Endabschnitt 78 des Gehäuses 71 ist zum vorderen Abschnitt durch eine Schraubverbindung fixiert, wobei eine Sicherungsschraube 83 zur Verdrehsicherung eingebracht ist.

Zum Auswechseln der Haltevorrichtung 17 ist an dem Führungsrohr 23 eine Schlüsselstelle 86 vorgesehen, um das Führungsrohr 23 von dem Halterohr 20 zu lösen. Das Führungsrohr 23 weist bis zur Schnittstelle 17 einen gegenüber der Zugstange 29 vergrößerten Innendurchmesser auf, um damit eine Zuführung eines Kühl- und/oder Schmiermittels über eine Zuführöffnung 87 zur Schnittstelle 27 zu ermöglichen. Die Haltevorrichtung 17 weist zwischen dem Stützabschnitt 26 und dem Gehäuse 78 eine umlaufende Vertiefung 88 auf, welche einen Freiraum bildet, damit das Entgratungswerkzeug 36 ohne Beschädigung der Spannvorrichtung 17 die Herstellung einer Innenfase 42 an dem Ausgangsrohr 14 und dem Rohrstück 12 ermöglicht.

Eine alternative Ausführungsform der erfindungsgemäßen Haltevorrichtung gemäß Figur 8 unterscheidet sich zu der in Figur 8 dadurch, dass der Stützabschnitt 26 ein Ausgleichselement aufnimmt und der Stützring 19 austauschbar auf der Lagerschale 25 vorgesehen ist. Ein Außendurchmesser des Ausgleichselementes und des Stützringes 19 ist an einen Innendurchmesser eines zu bearbeitenden Rohrstückes angepasst beziehungsweise darauf abgestimmt. Zur optimalen Anlage und Aufnahme des Rohrstückes in diesem Bereich sind die Ausgleichselemente und Stützringe 19 im Außendurchmesser beispielsweise mit einer Stufung von 0,1 oder 0,2 mm oder dergleichen versehen. Dadurch kann ein Ausgleich zur Toleranz der Spanneinrichtung 28 gegeben sein, der beispielsweise dazu geeignet ist, eine Toleranz von 2 mm zu überbrücken. Insbesondere bei dünnwandigen Rohren mit einer geringen Eigensteifigkeit bildet der Einsatz des Ausgleichselementes den Vorteil, dass links und rechts der Schnittstelle 27 nahezu gleiche Aufnahmebedingungen gegeben sind, so dass eine gute Abstützung der an die Schnittkante 44 anschließenden Endbereiche gegeben ist.

Der Ausgleichsring ist beispielsweise lösbar durch eine Verschraubung zum Stützabschnitt 26 vorgesehen. Die Umfangswandstärke ist exakt auf Maß gearbeitet. Durch eine Kennung am Ringbund wird ersichtlich, welche Zugabe in der Stufung gegenüber einem Außendurchmesser des Gehäuses 71 gegeben ist, um die Spanneinrichtung 28 für die nächstfolgende Bearbeitung entsprechend aufzurüsten.

Analoges gilt für den Stützring 19. Alternativ kann vorgesehen sein, dass der Stützring 19 in Analogie zum Stützabschnitt 26 mit einem Ausgleichselement 96 bestückt wird.

In Figur 9 ist die Spanneinrichtung 28 in einer entspannten Position dargestellt. In Figur 8a sind die Spannbacken 54 in einer Klemmposition dargestellt. Diese weisen einen vergrößerten Außenumfang 91 gegenüber dem Außenumfang 92 des Gehäuses 71 auf.

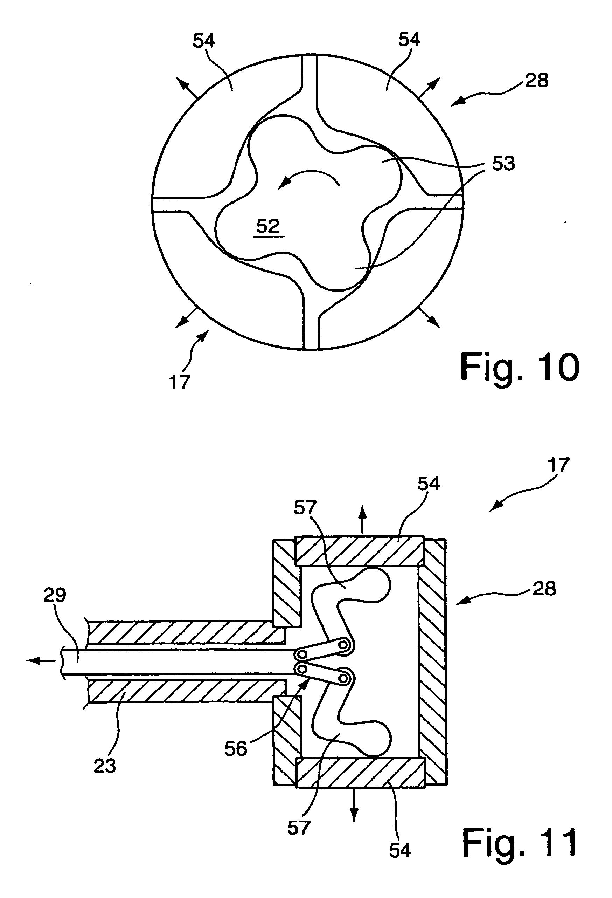

In den nachfolgenden Figuren 10 bis 13 sind weitere alternative Ausführungsformen der Haltevorrichtung 17 zu den Figuren 8a, b und 9 dargestellt.

In Figur 10 ist eine weitere mechanische Betätigungsanordnung dargestellt, um die Spanneinrichtung 28 auszugestalten. Die Zugstange weist an ihrem vorderen Ende eine Kurvenscheibe 52 auf, welche ein oder mehrere Nocken 53 umfasst. Bei Betätigung der Zugstange wird die Kurvenscheibe 52 rotierend angetrieben, um den Nocken 53 zugeordneten Spannbacken oder Segmente 54 radial nach außen zu bewegen. Dadurch wird der Außenumfang vergrößert und eine Klemmposition zum Rohrstück 12 erzielt. Zum Lösen der Klemmposition wird die Kurvenscheibe 52 in die entgegengesetzte Richtung zurückgesetzt. Durch diese Ausgestaltung kann eine sehr schmale Spanneinrichtung 17 ausgebildet werden, wodurch sehr schmale Rohrstücke 12 herstellbar sind.

In Figur 11 ist eine weitere alternative mechanische Anordnung einer Spanneinrichtung 28 dargestellt. Die Zugstange 29 weist an dem der Spanneinrichtung 28 zugeordneten Ende einen Hebelmechanismus 56 auf, welcher bewirkt, dass bei einer Stellbewegung der Zugstange 29 Hebel 57 nach außen bewegt werden und auf Spannbacken der Segmente 54 wirken, wodurch die Klemmposition der Haltevorrichtung 17 erreicht wird.

Alternativ zu den mechanischen Lösungen können auch elektrische oder elektromagnetische Spanneinrichtungen 28 ausgebildet sein. Bspw. können piezoelektrische Stellelemente oder elektromagnetische Stellelemente vorgesehen sein.

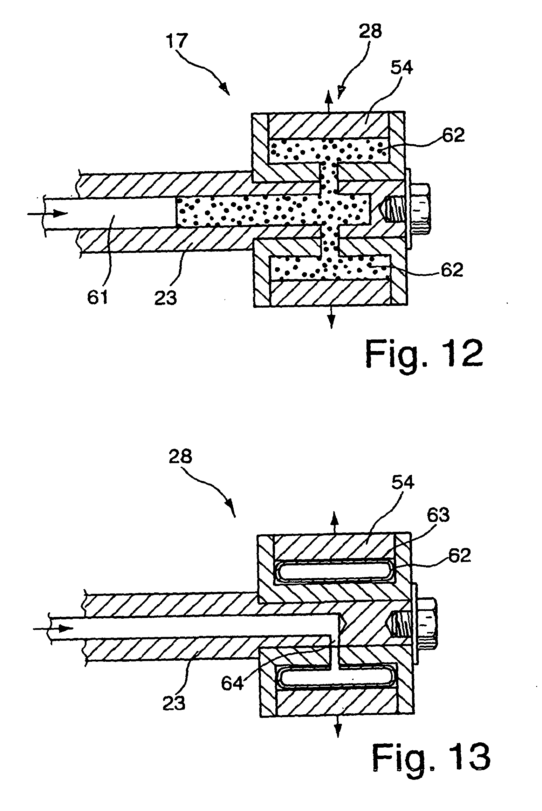

In Figur 12 ist eine weitere alternative Ausführungsform der Spannvorrichtung 28 dargestellt. Die Klemmwirkung wird bspw. über ein Druckmedium erzielt. Durch Betätigung eines Kolbens 61 wird der Druck in einer Kammer 62 erhöht, wodurch Segmente 54 nach außen bewegt werden. Dadurch werden die Segmente 54 in eine Klemmposition übergeführt. Dieser Kolben 61 kann unmittelbar im Bereich der Spanneinrichtung 28 positioniert sein oder nahe der Antriebseinheit 21, um bspw. die rotierenden Massen zu verringern. Als Druckmedium kann Luft, Öl, Wasser, eine gelartige Flüssigkeit oder dergleichen vorgesehen sein.

In Figur 13 ist eine weitere alternative Ausführungsform zu Figur 12 dargestellt. Die Kammer 62 ist als umlaufende Kammer ausgebildet und nimmt eine Membran 63 oder einen Schlauch auf, welcher über einen Anschluss 64 mit einem Druckmedium versorgt wird. Bei einer Druckbeaufschlagung werden die Segmente 54 radial nach außen bewegt, um eine Klemmwirkung zu erzielen.

Die Segmente 54 können zur sicheren Übertragung der Rotationskräfte eine Oberfläche mit hoher Rauhigkeit aufweisen oder eine gerändelte oder geriffelte Oberfläche umfassen, wodurch eine größere Oberflächenhaftung zum Rohrstück 12 erzielt wird. Ebenso können haftverbessernde Oberflächen oder Oberflächenmaterialien aufgebracht sein.

## Patentansprüche

1. Verfahren zum Schneiden und Entgraten von Rohren, insbesondere Kunststoff- und Papprohren, bei dem ein Ausgangsrohr (14) aufeinanderfolgend In eine Mehrzahl von kleinen Rohrstücken (12) geschnitten wird und diese nachfolgend in derselben Aufspannung entgratet werden, bei dem ein Schneidwerkzeug (34) einer Schnittstelle (27) zugeführt wird und ein Rohrstück (12) von dem Ausgangsrohr (14) abgetrennt wird, bei dem ein Entgratungswerkzeug (36) der Schnittstelle (27) zugeführt wird und Schnittkanten (44) am Au-Benumfang des Ausgangsrohres (14) und des Rohrstücks (12) entgratet werden und das Ausgangsrohr (14) oder Rohrstück (12) oder das Ausgangsrohr (14) und das Rohrstück (12) relativ zur Schnittstelle (27) voneinander weg bewegt werden, bei dem das Entgratungswerkzeug (36) in einen Innenraum des Ausgangsrohres (14) und des Rohrstücks (12) eingeführt wird, bei dem das Ausgangsrohr (14) oder das Rohrstück (12) oder das Ausgangsrohr (14) und das Rohrstück (12) in eine Entgratungsposition zum Entgratungswerkzeug (36) bewegt werden und die Schnittkante (44) am Innenumfang des Ausgangsrohres (14) und des Rohrstücks (12) entgratet werden, bei dem das Ausgangsrohr (14) oder das Rohrstück (12) oder das Ausgangsrohr (14) und das Rohrstück (12) aus der Entgratungsposition herausgeführt werden, und bei dem das Entgratungswerkzeug (36) in eine Ausgangsposition zurückgeführt wird, **dadurch gekennzeichnet, dass** das Ausgangsrohr (14) von einer Aufspannvorrichtung (16) aufgenommen wird und eine innerhalb des Ausgangsrohres (14) angeordneten Haltevorrichtung (17) zur Schnittstelle (27) positioniert wird und das Ausgangsrohr (14) durch die Aufspannvorrichtung (16) und die innerhalb des Ausgangsrohres (14) vorgesehenen Haltevorrichtung (17) durch Klemmung fixiert wird.

2. Verfahren nach Anspruch 1, **dadurch gekennzeichnet, dass** das Entgratungswerkzeug (36) zur Bearbeitung einer äußeren Schnittkante (44) dem Schneidwerkzeug (34) vorauseilend, nacheilend oder gleichzeitig der Schnittstelle (27) zugeführt wird.

3. Verfahren nach Anspruch 1 oder 2, **dadurch gekennzeichnet, dass** nach dem Entgraten der inneren Schnittkante (44) an Stirnflächen (49) des Rohrstücks (12) und des Ausgangsrohres (14) eine Feinbearbeitung durchgeführt wird.

4. Verfahren nach Anspruch 3, **dadurch gekennzeichnet, dass** die Bearbeitung der Stirnfläche (49) des Rohrstücks (12) und des Ausgangsrohres (14) nacheinander oder gleichzeitig durch Positionieren des Ausgangsrohres (14) oder des Rohrstücks (12) oder des Ausgangsrohres (14) und des Rohrstücks (12) in einer Feinbearbeitungsposition durchgeführt wird.

5. Verfahren nach einem der vorhergehenden Ansprüche, **dadurch gekennzeichnet, dass** während dem Abschneiden eines Rohrstücks (12) das Ausgangsrohr (14) in Rotation versetzt wird.

6. Verfahren nach Anspruch 1, **dadurch gekennzeichnet, dass** während dem Entgraten der Schnittkanten (44) und vorzugsweise der Feinbearbeitung der Stirnfläche (49) das Ausgangsrohr (14) und das Rohrstück (12) in Rotation, vorzugsweise gleichlaufend, versetzt wird.

7. Verfahren nach einem der vorhergehenden Ansprüche, **dadurch gekennzeichnet, dass** zumindest während dem Abschneiden eines Rohrstücks (12) zumindest ein Kühl- und/oder Schmiermedium der Schnittstelle (27) zugeführt wird.

8. Verfahren nach einem der vorhergehenden Ansprüche, **dadurch gekennzeichnet, dass** die Haltevorrichtung (17) von einer das Ausgangsrohr (14) antreibenden Antriebseinheit (21) in Rotation versetzt wird.

9. Verfahren nach einem der vorhergehenden Ansprüche, **dadurch gekennzeichnet, dass** die Haltevorrichtung (17), welche das abgeschnittene Rohrstück (12) aufnimmt, durch eine am Außenumfang des Rohrstücks (12) angreifende Lagerung (39) koaxial zur Aufspannvorrichtung (16) positioniert wird.

10. Verfahren nach einem der vorhergehenden Ansprüche, **dadurch gekennzeichnet, dass** über die innerhalb des Rohrstücks (12) und des Ausgangsrohres (14) angeordnete Haltevorrichtung (17) ein Luftstrom der Schnittstelle (27) zugeführt wird.

11. Vorrichtung zum Schneiden und Entgraten von Rohren mit einer Aufspannvorrichtung (16) zur Aufnahme eines Ausgangsrohres (14) und mit einer in dem Ausgangsrohr (14) angeordneten Haltevorrichtung (17), welche im Bereich einer Schnittstelle (27) vorgesehen ist, mit einer Antriebseinheit (21), welche die Aufspannvorrichtung (16) und die Haltevorrichtung (17) antreibt und mit einem Schneidwerkzeug (34) und einem Entgratungswerkzeug (36), welche einer Schnittstelle (27) zugeordnet sind, **dadurch gekennzeichnet, dass** die in einem Ausgangsrohr (14) angeordnete Haltevorrichtung (17) einen Stützabschnitt (26) aufweist, der der Schnittstelle (27) zugeordnet ist und das Ausgangsrohr (14) stützt und eine im Außenumfang vergrößerbare Spanneinrichtung (28) vorgesehen ist, welche den Stützabschnitt gegenüberliegend angeordnet und ebenfalls der Schnittstelle (27) zugeordnet ist und das Rohrstück (12) fixiert.

12. Vorrichtung nach Anspruch 11, **dadurch gekennzeichnet, dass** die Aufspannvorrichtung (16) relativ zur Haltevorrichtung (17) axial verschiebbar ist.

13. Vorrichtung nach Anspruch 11 oder 12, **dadurch gekennzeichnet, dass** der Stützabschnitt (26) in einer Arbeitsposition auf einem Führungsrohr (23) fest angeordnet ist und vorzugsweise in Anpassung an unterschiedliche Durchmesser austauschbar ist.

14. Vorrichtung nach einem der Ansprüche 11 bis 13, **dadurch gekennzeichnet, dass** das Schneidwerkzeug (34) und das Entgratungswerkzeug (36) in einer Position zur Schnittstelle (27) fixiert und in Arbeitsrichtung parallel zur Schnittstelle (27) hin und her bewegbar sind.

15. Vorrichtung nach einem der Ansprüche 11 bis 14, **dadurch gekennzeichnet, dass** zumindest das Schneidwerkzeug (34) oder das Entgratungswerkzeug (36) entlang der Längsachse des Ausgangsrohres (14) verfahrbar sind.

16. Vorrichtung nach einem der Ansprüche 11 bis 15, **dadurch gekennzeichnet, dass** die Haltevorrichtung (17) des Rohrstücks (12) auf einem Führungsrohr (23) positioniert ist, welche Wirkelemente zur Betätigung der Spanneinrichtung (28) zur Vergrößerung des Außenurnfangs umfasst ist.

17. Vorrichtung nach einem der Ansprüche 11 bis 16, **dadurch gekennzeichnet, dass** eine Zugstange (29) an dem Führungsrohr (23) vorgesehen ist, welches in einer Schließstellung auf ein Keilgetriebe (31) der Spanneinrichtung (28) wirkt und Segmente (54) der Spanneinrichtung (28) in einer Klemmposition zum Rohrstück (12) fixiert.

18. Vorrichtung nach einem der Ansprüche 11 bis 16, **dadurch gekennzeichnet, dass** das Führungsrohr (23) eine Kurvenscheibe (52) mit Nocken (53) betätigt, welche Segmente (54) der Spanneinrichtung (28) radial nach außen bewegt.

19. Vorrichtung nach einem der Ansprüche 11 bis 16, **dadurch gekennzeichnet, dass** in dem Führungsrohr (23) ein Druckkolben (61) geführt oder dem Führungsrohr (23) zugeordnet ist, welcher ein Druckmedium in zumindest einer Kammer (62) in der Spanneinrichtung (28) mit Druck beaufschlagt und Segmente (54) radial nach außen bewegt.

20. Vorrichtung nach Anspruch 19, **dadurch gekennzeichnet, dass** ein hydraulisches oder pneumatisches Druckmedium vorgesehen ist.

21. Vorrichtung nach einem der Ansprüche 11 bis 16, **dadurch gekennzeichnet, dass** das Führungsrohr (23) eine Zugstange (29) umfasst, welche einen Hebelmechanismus (56) betätigt und über Hebel (57) die Segmente (54) radial nach außen bewegt.

22. Vorrichtung nach einem der Ansprüche 11 bis 21, **dadurch gekennzeichnet, dass** auf einem Stützabschnitt (26) ein Ausgleichselement (96) auswechselbar vorgesehen ist.

23. Vorrichtung nach einem der Ansprüche 11 bis 22, **dadurch gekennzeichnet, dass** ein Stützring (19) auswechselbar auf einem Ausstoßer (24) oder ein Ausgleichselement (96) auswechselbar auf einem Stützring (19) vorgesehen ist.

## Claims

1. Method for cutting and deburring tubes, in particular plastic and cardboard tubes, wherein a starting tube (14) is successively cut into numerous small tube pieces (12) and thereafter deburred in the same clamping, wherein a cutting tool (34) is supplied to a cut place (27) and a tube piece (12) is parted from the starting tube (14), wherein a deburring tool (36) is supplied to the cut place (27) and cut edges (44) are deburred at the outer periphery of the starting tube (14) and the tube piece (12); and wherein the starting tube (14) or tube piece (12) or the starting tube (14) and the tube piece (12) are moved apart from one another relative to the cut place (27) wherein the deburring tool (36) is introduced into an interior of the starting tube (14) and of the tube piece (12) wherein the starting tube (14) or the tube piece (12) or the starting tube (14) and the tube piece (12) are moved into a deburring position to the deburring tool (36) and the cut edges (44) at the inner periphery of the starting tube (14) and the inner tube (12) are deburred wherein the starting tube (14) or the tube piece (12) or starting tube (14) and the tube piece (12) are moved out of the deburring position, and wherein the deburring tool (36) is moved back into a starting position, **characterized in, that** the starting tube (14) is positioned on a clamping device (16) and a retaining device (17) arranged within the interior of the starting tube (14) is positioned to the cut place (27) and the starting tube (14) is fixed by means of the clamping device (16) and retaining device (17) provided within the interior of the starting tube (14), is fixed by clamping.

2. Method according to claim 1, **characterized in, that** in the deburring tool (36) is supplied in advance, after, or simultaneously with the cutting tool (34) to the cut place (27) for processing an outer cut edge (44).

3. Method according to claim 1 or 2, **characterized in, that** a fine processing is performed after the deburring of the inner cut edge (44) at end faces (49) of the tube piece (12) and of the starting tube (14).

4. Method according to claim 3, **characterized in, that** the processing of the end face (49) of the tube piece (12) and of the starting tube (14) are successively or simultaneously passed through into a fine processing position by positioning the starting tube (14) or the tube piece (12) or the starting tube (14) and the tube piece (12).

5. Method according to one of the preceding claims, **characterized in, that** the starting tube (14) is set in rotation during the cutting off of a tube piece (12).

6. Method according to claim 1, **characterized in, that** the starting tube (14) and the tube piece (12) are set in rotation, in particular running alike, during a deburring of the cut edges (44) and preferably during a fine processing.

7. Method according one of the preceding claims, **characterized in, that** at least a coolant and/or a lubricant is supplied to the cut place (27) during the cutting off of a tube piece (12).

8. Method according to one of the preceding claims, **characterized in, that** the retaining device (17) is set in rotation by a drive unit (21), from which the starting tube (14) is driven.

9. Method according to one of the preceding claims, **characterized in, that** the retaining device (17), which receives the cut-off tube piece (12), is positioned coaxially of the clamping device (16) by a bearing (39) engaging on the outer periphery of the tube piece (12).

10. Method according to one of the preceding claims, **characterized in, that** an air stream is supplied to the cut place (27) via the retaining device (17) arranged within the interior of the tube piece (12) and of the starting tube (14).

11. Device for cutting and deburring of tubes, comprising a clamping device (16) for receiving a starting tube (14) and a retaining device (17) arranged in the starting tube (14) which is provided in the region of a cut place (27), a drive unit (21) which drives the clamping device (16) and the retaining device (17) and a cutting tool (34) and a deburring tool (36) which are allocated to a cut place (27), **characterized in, that** the retaining device (17) arranged in a starting tube (14) has a support section (26) which is arranged to the cut place (27) and supports the starting tube (14) and a clamping device (28), which has an enlarged outer periphery, is provided, which clamping device is arranged opposite the support section and is also allocated to the cut place (27) and fixes the tube piece (12).

12. Device according to claim 11, **characterized in, that** the clamping device (16) is axially displaceable relative to the retaining device (17).

13. Device according to claim 11 or 12, **characterized in, that** the support section (26) is fixedly arranged in a working position on a guide tube (23) and is preferably interchangeable for adaptation to different diameters.

14. Device according to one of the claims 11 to 13, **characterized in, that** the cutting tool (34) and the deburring tool (36) are fixed in a position to the cut place (27) and are movable back and forth parallel to the cut place (27) in the working direction.

15. Device according to one of the claims 11 to 14, **characterized in, that** at least the cutting tool (34) or the deburring tool (36) is able to travel along the longitudinal axis of the starting tube (14).

16. Device according to one of the claims 11 to 15, **characterized in, that** the retaining device (17) of the tube piece (12) is positioned on a guide tube (23), which is provided with effective elements for actuating the clamping device (28) for enlarging the outer periphery.

17. Device according to one of the claims 11 to 16, **characterized in, that** a tie rod (29) is provided on the guide tube (23) and acts in a closing position on a wedge drive (31) of the clamping device (28) and fixes segments (54) of the clamping device (28) to the tube piece (12) in a clamping position.

18. Device according to one of the claims 11 to 16, **characterized in, that** the guide tube (23) actuates a cam disk (52) with cams (53) which moves segments (54) of the clamping device (28) radially outward.

19. Device according to one of the claims 11 to 16, **characterized in, that** a pressure piston (61) is guided in the guide tube (23) or is allocated to the guide tube (23), which acts on a pressure medium in at least one chamber (62) in the clamping device (28) and moves segments (54) radially outward.

20. Device according to claim 19, **characterized in, that** a hydraulic or pneumatic pressure medium is provided.

21. Device according to one of the claims 11 to 16, **characterized in, that** the guide tube (23) includes a tie rod (23) which actuates a lever mechanism (56) and by means of levers (57) moves the segments (54) radially outward.

22. Device according to one o the claims 11 to 21, **characterized in, that** an equalizing element (96) is interchangeably provided on a support section (28).

23. Device according to one of the claims 11 to 22, **characterized in, that** a support ring (19) is interchangeably provided on an ejector (24) or an equalizing element (96) is interchangeably provided on a support ring (19).

## Revendications

1. Procédé permettant de couper et d'ébarber des tubes, notamment des tubes en matière plastique et en carton, lors duquel un tube initial (14) est coupé successivement en une pluralité de petits morceaux de tube (12), lesquels sont ensuite ébarbés dans la même position de fixation, lors duquel un outil de coupe (34) est amené à un point de coupe (27) et un morceau de tube (12) est séparé du tube initial (14), lors duquel un outil à ébarber (36) est amené au point de coupe et des arêtes de coupe (44) situées sur la circonférence extérieure du tube initial (14) et du morceau de tube (12) sont ébarbées, et le tube initial (14) ou le morceau de tube (12) ou bien le tube initial (14) et le morceau de tube (12) sont éloignés l'un de l'autre par rapport au point de coupe (27), lors duquel l'outil à ébarber (36) est introduit dans un espace intérieur du tube initial (14) et du morceau de tube (12), lors duquel le tube initial (14) ou le morceau de tube (12) ou bien le tube initial (14) et le morceau de tube (12) sont déplacés vers l'outil à ébarber (36) jusqu'à une position d'ébarbage et les arêtes de coupe (44) situées sur la circonférence intérieure du tube initial (14) et du morceau de tube (12) sont ébarbées, lors duquel le tube initial (14) ou le morceau de tube (12) ou bien le tube initial (14) et le morceau de tube (12) sont sortis de la position d'ébarbage, et lors duquel l'outil à ébarber (36) est ramené dans une position initiale, **caractérisé en ce que** le tube initial (14) est reçu dans un dispositif de fixation (16), et **en ce qu'**un dispositif de retenue (17) disposé à l'intérieur du tube initial (14) est positionné par rapport au point de coupe (27), et **en ce que** le tube initial (14) est fixé par blocage au moyen du dispositif de fixation (16) et du dispositif de retenue (17) prévu à l'intérieur du tube initial (14).

2. Dispositif selon la revendication 1, **caractérisé en ce que** l'outil à ébarber (36) est amené, en vue de l'usinage d'une arête de coupe (44) extérieure, au point de coupe (27) en précédant ou en succédant à l'outil de coupe (34) ou alors simultanément à celui-ci.

3. Procédé selon la revendication 1 ou 2, **caractérisé en ce qu'**un usinage de précision est réalisé sur des faces terminales (49) du morceau de tube (12) et du tube initial (14) après l'ébarbage de l'arête de coupe (44) intérieure.

4. Procédé selon la revendication 3, **caractérisé en ce que** les faces terminales (49) du morceau de tube (12) et du tube initial (14) sont usinées successivement ou simultanément par positionnement du tube initial (14) ou du morceau de tube (12) ou bien du tube initial (14) et du morceau de tube (12) dans une position d'usinage de précision.

5. Procédé selon l'une des revendications précédentes, **caractérisé en ce que**, pendant la coupe d'un morceau de tube (12), le tube initial (14) est mis en rotation.

6. Procédé selon la revendication 1, **caractérisé en ce que**, pendant l'ébarbage des arêtes de coupe (44) et de préférence pendant l'usinage de précision de la face terminale (49), le tube initial (14) et le morceau de tube (12) sont mis en rotation, de préférence de manière synchrone.

7. Procédé selon l'une des revendications précédentes, **caractérisé en ce que**, au moins pendant la coupe d'un morceau de tube (12), au moins un réfrigérant et/ou lubrifiant est amené au point de coupe (27).

8. Procédé selon l'une des revendications précédentes, **caractérisé en ce que** le dispositif de retenue (17) est mis en rotation par une unité d'entraînement (21) entraînant le tube initial (14).

9. Procédé selon l'une des revendications précédentes, **caractérisé en ce que** le dispositif de retenue (17) qui reçoit le morceau de tube (12) coupé est positionné coaxialement au dispositif de fixation (16) par un logement (39) agissant sur la circonférence extérieure du morceau de tube (12).

10. Procédé selon l'une des revendications précédentes, **caractérisé en ce qu'**un flux d'air est amené au point de coupe (27) par le biais du dispositif de retenue (17) disposé à l'intérieur du morceau de tube (12) et du tube initial (14).

11. Dispositif permettant de couper et d'ébarber des tubes, avec un dispositif de fixation (16) permettant de recevoir un tube initial (14) et avec un dispositif de retenue (17) disposé dans le tube initial (14) et prévu dans la zone d'un point de coupe (27), avec une unité d'entraînement (21) qui entraîne le dispositif de fixation (16) et le dispositif de retenue (17), et avec un outil de coupe (34) et un outil à ébarber (36), lesquels sont attribués à un point de coupe (27), **caractérisé en ce que** le dispositif de retenue (17) disposé dans un tube initial (14) présente une partie d'appui (26) qui est attribuée au point de coupe (27) et contre laquelle s'appuie le tube initial (14), et **en ce qu'**il est prévu un système de serrage (28) à la circonférence extérieure élargissable disposé du côté opposé à la partie d'appui, lequel est également attribué au point de coupe (27) et qui fixe le morceau de tube (12).

12. Dispositif selon la revendication 11, **caractérisé en ce que** le dispositif de fixation (16) est déplaçable de manière axiale par rapport au dispositif de retenue (17).

13. Dispositif selon la revendication 11 ou 12, **caractérisé en ce que** la partie d'appui (26), lorsqu'elle se trouve dans une position de travail, est disposée de manière fixe sur un tube de guidage (23) et peut être de préférence échangée en vue d'être adaptée à des diamètres différents.

14. Dispositif selon l'une des revendications 11 à 13, **caractérisé en ce que** l'outil de coupe (34) et l'outil à ébarber (36) sont fixés dans une position donnée par rapport au point de coupe (27) et peuvent aller et venir en sens de travail, parallèlement au point de coupe (27).

15. Dispositif selon l'une des revendications 11 à 14, **caractérisé en ce qu'**au moins l'outil de coupe (34) ou l'outil à ébarber (36) peut être déplacé le long de l'axe longitudinal du tube initial (14).

16. Dispositif selon l'une des revendications 11 à 15, **caractérisé en ce que** le dispositif de retenue (17) du morceau de tube (12) est positionné sur un tube de guidage (23), lequel dispositif comprend des éléments actionneurs permettant d'actionner le dispositif de serrage (28) afin d'en élargir la circonférence extérieure.

17. Dispositif selon l'une des revendications 11 à 16, **caractérisé en ce qu'**une tige de traction (29) est prévue au niveau du tube de guidage (23), lequel agit, en position fermée, sur un engrenage à coin (31) du système de serrage (28) et fixe des segments (54) du dispositif de serrage (28) dans une position de blocage par rapport au morceau de tube (12).

18. Dispositif selon l'une des revendications 11 à 16, **caractérisé en ce que** le tube de guidage (23) actionne un disque à cames (52) pourvu de cames (53), lequel déplace radialement vers l'extérieur des segments (54) du système de serrage (28).

19. Dispositif selon l'une des revendications 11 à 16, **caractérisé en ce qu'**un piston de compression (61) est inséré dans le tube de guidage (23) ou est affecté au tube de guidage (23), lequel piston met sous pression un fluide de compression présent dans au moins une chambre (62) du système de serrage (28) et déplace des segments (54) radialement vers l'extérieur.

20. Dispositif selon la revendication 19, **caractérisé en ce qu'**il est prévu d'utiliser un fluide de compression hydraulique ou pneumatique.

21. Dispositif selon l'une des revendications 11 à 16, **caractérisé en ce que** le tube de guidage (23) comprend une tige de traction (29) qui actionne un mécanisme à leviers (56) et déplace, au moyen de leviers (57), les segments (54) radialement vers l'extérieur.

22. Dispositif selon l'une des revendications 11 à 21, **caractérisé en ce qu'**un élément de compensation (96) est prévu sur la partie d'appui (26) de manière à pourvoir être échangé.

23. Dispositif selon l'une des revendications 11 à 22, **caractérisé en ce qu'**il est prévu une bague d'appui (19) installée de manière échangeable sur un éjecteur (24), ou un élément de compensation (96) installé de manière échangeable sur une bague d'appui (19).
